(19) **Europäisches Patentamt**

**European Patent Office**

**Office européen des brevets**

(11) **EP 1 082 773 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(21) Anmeldenummer: **99924988.1**

(22) Anmeldetag: **17.05.1999**

(51) Int Cl.⁷: $H01M\ 8/06$

(86) Internationale Anmeldenummer:
**PCT/EP99/03375**

(87) Internationale Veröffentlichungsnummer:
**WO 99/060646 (25.11.1999 Gazette 1999/47)**

(54) **BRENNSTOFFZELLENSYSTEM UND VERFAHREN ZUM ERZEUGEN ELEKTRISCHER ENERGIE MITTELS EINES BRENNSTOFFZELLENSYSTEMS**

FUEL CELL SYSTEM AND METHOD FOR PRODUCING ELECTRIC ENERGY USING A FUEL CELL SYSTEM

SYSTEME DE PILE A COMBUSTIBLE ET PROCEDE POUR PRODUIRE DE L'ENERGIE ELECTRIQUE AU MOYEN D'UN TEL SYSTEME

(84) Benannte Vertragsstaaten:
**DE ES FR GB IT SE**

(30) Priorität: **20.05.1998 DE 19822689**

(43) Veröffentlichungstag der Anmeldung:
**14.03.2001 Patentblatt 2001/11**

(73) Patentinhaber:
• **Volkswagen Aktiengesellschaft**
  **38436 Wolfsburg (DE)**
• **AB VOLVO**
  **405 08 Göteborg (SE)**

(72) Erfinder:
• **DÜBEL, Olaf**
  **D-38550 Isenbüttel (DE)**
• **KÖNIG, Axel**
  **D-38448 Wolfsburg (DE)**
• **EKDUNGE, Per**
  **S-412 79 Göteborg (SE)**
• **ALIN, Peter**
  **S-261 39 Landskrona (SE)**
• **REINKINGH, Jessica, Grace**
  **Frazer, PA 19355 (US)**
• **MALLANT, Ronald**
  **NL-1824 GP Alkmaar (NL)**

(56) Entgegenhaltungen:
EP-A- 0 677 411        DE-C- 4 032 993
US-A- 5 360 679

• **PATENT ABSTRACTS OF JAPAN vol. 095, no. 006, 31. Juli 1995 (1995-07-31) & JP 07 057756 A (TOSHIBA CORP), 3. März 1995 (1995-03-03)**

**Beschreibung**

Die Erfindung betrifft ein Brennstoffzellensystem, insbesondere als Antriebssystem eines Kraftfahrzeuges, mit einer Reformereinheit zum Erzeugen von Wasserstoff aus einem Energieträger, insbesondere einem flüssigen Rohstoff unter Zufuhr von Luft zum Betreiben einer nachgeschalteten Brennstoffzelleneinheit, wobei zwischen Reformereinheit und Brennstoffzelleneinheit eine Oxidationseinrichtung zum Umwandeln von Kohlenmonoxid in Kohlendioxid angeordnet ist, gemäß dem Oberbegriff des Anspruchs 1. Die Erfindung betrifft ferner Verfahren zum Erzeugen elektrischer Energie mittels eines Brennstoffzellensystems, insbesondere für ein Antriebssystem eines Kraftfahrzeuges, wobei zum Betreiben einer Brennstoffzelleneinheit Wasserstoff in einem Reformerprozeß aus einem Rohstoff unter Zufuhr von Luft erzeugt wird, wobei nach dem Reformerprozeß und vor der Brennstoffzelleneinheit Kohlenmonoxid zu Kohlendioxid oxidiert wird, gemäß dem Oberbegriff des Anspruchs 15.

Aus der EP 0 217 532 ist ein katalytischer Wasserstoffgenerator bekannt, welcher aus einem Methanol-Luft-Gemisch in einer autothermen Reformereinheit Wasserstoff erzeugt. Hierbei ist in der Reformereinheit ein Thermoelement angeordnet, welches eine Luftzufuhr in das Methanol-Luft-Gemisch derart beeinflußt, daß mit zunehmender Temperatur am Ort des Thermoelementes im Reformer die Luftzufuhr reduziert wird.

In einer Weiterentwicklung dieser Anordnung beschreibt die WO 96/00186 einen Wasserstoffgenerator, wobei der Katalysator um ein Einlaßrohr für das Methanol-Luft-Gemisch derart angeordnet ist, daß das Methanol-Luft-Gemisch radial durch den Katalysator hindurchströmt.

Die DE 43 45 319 C2 und die DE 43 29 323 C2 beschreiben ein Brennstoffzellenstromerzeugungssystem, wobei aus einem Methanol-Wasser-Gemisch in einer Reformereinheit Wasserstoff erzeugt wird. Dieser Wasserstoff wird einer nachgeschalteten Brennstoffzelle zum Erzeugen elektrischer Energie zugeführt. Zum Erzeugen einer ausreichenden Reaktionswärme im Reformer wird ein Teil des Methanols nicht dem Methanol-Wasser-Gemisch zugefügt, sondern in einem zusätzlichen Brenner verbrannt.

Aus der DE 196 29 084 A1 ist ein Elektrofahrzeug mit einer Antriebsbatterie aus Brennstoffzellen bekannt, wobei die Brennstoffzellen derart angeordnet sind, daß diese von einem Fahrtwind gekühlt werden.

In dem Artikel "Heureka?" in der DE-Z Autotechnik Nr. 5/1997, Seiten 20/21 wird ein Kraftfahrzeug mit Brennstoffzellenantrieb beschrieben, wobei der zum Betrieb der Brennstoffzellen erforderliche Wasserstoff im Fahrzeug selbst aus Benzin gewonnen wird. In einem mehrstufigen Prozeß wird dabei das Benzin in Wasserstoff umgewandelt. Vor der Umwandlung wird das Benzin in einem Verdampfer durch Erhitzen in gasförmigen Zustand gebracht. In einem Teilverbrennungsreaktor entsteht unter Sauerstoffmangel Wasserstoff und Kohlenmonoxid. Zum Oxidieren des Kohlenmonoxids sind Kupferoxid- und Zinkoxid-Katalysatoren vorgesehen, wobei Wasserdampf als Sauerstofflieferant für die Reaktion zugeführt wird. In einem weiteren Schritt wird ein letzter Anteil von Kohlenmonoxid von ca. 1% in einem konventionellen Platin-Oxidationskatalysator unter Luftzufuhr nachverbrannt. Das so erhaltene Gemisch aus Wasserstoff, Kohlenmonoxid und Kohlendioxid enthält noch 10 ppm Kohlenmonoxid, was für eine nachgeschaltete Brennstoffzelle unbedenklich ist. Nach einer Abkühlung auf ca. 80 Grad Celsius in einem Wärmetauscher wird daher das Gas in die Brennstoffzelle geleitet.

Aus dem Artikel "Alternative Fuel" in der JP-Zeitschrift Asia-Pacific Automotive Report, 20.01.1998, Vol. 272, Seite 34 bis 39 ist ein ähnliches Brennstoffzellensystem für Kraftfahrzeuge bekannt, wobei eine Methanolreformereinheit zum Erzeugen von Wasserstoff für eine Brennstoffzelle vorgesehen ist. Hierbei wird bei der elektrochemischen Reaktion von Wasserstoff und Sauerstoff erzeugtes Wasser für den Reformerprozeß wiederverwendet. Für den Reformerprozeß wird deionisiertes Wasser und Methanol gemischt, verdampft und in Wasserstoff und Kohlendioxid bei einer Temperatur von 250 Grad Celsius umgewandelt. Dieser Wasserstoff wird einer Brennstoffzelle zugeführt, welche diesen zusammen mit Luftsauerstoff in einem katalytischen Prozeß in elektrische Energie und Wasser umwandelt. Die zum Verdampfen und für den Reformerprozeß erforderliche Wärmeenergie wird in einem der Brennstoffzelle nachgeschalteten katalytischen Brenner erzeugt, welcher mit Restgas aus der Brennstoffzelle betrieben wird. Dieses Gas enthält Wasserstoff, da die Brennstoffzellenanordnung lediglich etwa 75% des zugeführten Wasserstoffs verwertet. Sofern nicht genügend Restwasserstoff für den katalytischen Brenner zur Verfügung steht, wird Methanol aus dem Kraftstofftank zur Wärmegewinnung für den Reformer verwendet. Vor dem Einleiten des im Reformer erzeugten Gases mit Wasserstoffanteil, wird dieses Gas mittels einerkatalytischen Reaktion gereinigt, wobei Kohlenmonoxid in Kohlendioxid umgesetzt wird. In einer dargestellten Ausführungsform eines Brennstoffzellensystems für ein Kraftfahrzeug umfaßt der Methanolreformer einen Verdampfer, einen Reformer und ein Oxidationseinheit für Kohlenmonoxid.

Die DE 43 22 765 C1 beschreibt ein Verfahren und eine Vorrichtung zur dynamischen Leistungsregelung für ein Fahrzeug mit Brennstoffzelle, welche eine elektrische Antriebseinheit mit elektrischer Energie versorgt. Ausgehend von einer Leistungsanforderung entsprechend einer Fahrpedalstellung wird ein Luftmassenstrom berechnet, welcher zur Bereitstellung einer entsprechenden Solleistung seitens der Brennstoffzelle benötigt wird. Ein in einer Ansaugleitung der Brennstoffzelle angeordneter Kompressor wird entsprechend dem benötigten Luftstrom in seiner Drehzahl geregelt.

Aus der EP 0 629 013 B1 ist ein Verfahren und eine Vorrichtung zur Luftversorgung eines Brennstoffzellensystems bekannt. Hierbei wird eine Prozeßluft mittels eines Verdichters vor einem Eintritt in eine entsprechende Brennstoffzelle verdichtet. Nach dem Durchströmen der Brennstoffzelle wird die abgeführte Abluft zur Energierückgewinnung über eine Turbine entspannt, wobei die Turbine, der Verdichter und ein zusätzlicher Antriebsmotor auf einer gemeinsamen Welle angeordnet sind. Der Verdichter ist drehzahlveränderlich ausgebildet und mit einem Expander als Turbine zum Entspannen der Abluft auf einer gemeinsamen Welle angeordnet. Durch Verwendung eines Expanders mit veränderlichem Schluckvermögen erfolgt eine Luftstromregelung für die Brennstoffzelle.

Aus der WO 97/16648 ist ein Schraubenkompressor für einen Kühlschrank bekannt. Dieser Schraubenkompressor umfaßt zwei Pumpkammern, wobei ein Auslaß einer ersten Pumpkammer mit einem Sekundäreinlaß einer zweiten Pumpkammer verbunden ist.

Der vorliegenden Erfindung liegt die Aufgabe zugrunde, ein Brennstoffzellensystem der obengenannten Art derart weiter zu entwickeln, daß ein wirtschaftlicher und umweltfreundlicher Einsatz zum Erzeugen elektrischer Energie, insbesondere für ein Antriebssystem eines Kraftfahrzeuges, bei hohem Wirkungsgrad und kleinem Bauraum ermöglicht wird.

Diese Aufgabe wird erfindungsgemäß durch ein Brennstoffzellensystem der o.g. Art mit den in Anspruch 1 gekennzeichneten Merkmalen und durch ein Verfahren der o.g. Art mit den in Anspruch 15 gekennzeichneten Merkmalen gelöst. Vorteilhafte Ausgestaltungen der Erfindung sind in den abhängigen Ansprüchen angegeben.

Dazu ist es bei einem Brennstoffzellensystem erfindungsgemäß vorgesehen, daß der Reformereinheit und der Brennstoffzelleneinheit ein zweistufiger Verdichter für Luft zugeordnet ist.

Dies hat den Vorteil, daß sowohl Anode wie auch Kathode der Brennstoffzelleneinheit trotz der unterschiedlichen Leitungswege und der voneinander verschiedenen, zu durchlaufenden Stufen ein gleicher Druck angeboten werden kann, was für deren Funktionsweise von erheblicher Bedeutung ist. So wird an einer ersten Stufe des Verdicherters zur Luftversorgung der Kathode der Brennstoffzelleneinheit ein Luftstrom mit einem vergleichsweise niedrigen Druck abgegriffen, beispielsweise etwa 2,5 bar Druck bis 3,5 bar Druck, insbesondere ca. 3 bar Druck, während von einer zweiten Stufe des Verdichters, welche primär der Luftversorgung der Reformereinheit 18 dient, ein Luftstrom mit einem relativ hohen Druck abgegriffen wird, beispielsweise etwa 3,2 bar Druck bis 4,2 bar Druck, insbesondere ca. 3,7 bar Druck. Dieser erhöhte Druck in der zweiten Stufe berücksichtigt somit von vornherein Druckverluste, die im weiteren Weg von der Reformereinheit über die Oxidationseinheit zur Brennstoffzelleneinheit auftreten.

Unabhängig von der absoluten Höhe der gewählten Drücke beträgt der Druckunterschied zwischen der ersten und der zweiten Stufe etwa 0,5 bis 0,9 bar, insbesondere 0,7 bar Druck.

Der zweistufige Verdichter, oder auch Kompressor, kann als Kolbenverdichter, als Schraubenverdichter oder Schraubenkompressor oder auch als Kreiselverdichter ausgebildet sein.

Für eine weitere Verbesserung der Wirtschaftlichkeit und insbesondere des Bauraumbedarfes kann an der Oxidationseinrichtung eine Wassereinspritzeinrichtung vorgesehen sein, welche in diese Wasser einspritzt.

Dies hat den Vorteil, daß gleichzeitig mit der Entfernung von Kohlenmonoxid aus einem Prozeßgas aus der Reformereinheit mit hohem Wasserstoffanteil für die Brennstoffzelleneinheit eine ausreichende Abkühlung bzw. Vorkühlung erfolgt, so daß das Prozeßgas ohne eine aufwendige Kühleinrichtung bzw. mit einer entsprechend geringer aufwendigen Kühleinrichtung zur Brennstoffzetleneinheit geleitet werden kann. Ferner liefert das eingespritzte Wasser auch einen für die Oxidation von Kohlenmonoxid erforderlichen Sauerstoff, wobei gleichzeitig durch diese Oxidationsreaktion zusätzlich Wasserstoff freigesetzt wird, so daß eine separate Sauerstoffzuführung zur Oxidationseinrichtung mengenmäßig verringert werden kann und gleichzeitig ein Wasserstoffanteil im Prozeßgas erhöht wird. Bei gleicher Leistung kann durch die zusätzliche Wasserstoffanreicherung in der Oxidationseinrichtung das Brennstoffzellensystem kleiner dimensioniert werden. Dies reduziert in entsprechender Weise einen Bauraumbedarf sowie einen apparativen Aufwand des Brennstoffzellensystems.

In einer bevorzugten Ausführungsform weist die Reformereinheit einen Mischer für den Rohstoff und eine sauerstoffhaltige Substanz, insbesondere Wasser und/oder Luft, auf.

Einen geschlossenen Wasserkreislauf ohne die Notwendigkeit große Mengen Wasser für den Reformerprozeß mitführen zu müssen erzielt man dadurch, daß in einem Abgasstrom aus einer Kathode der Brennstoffzelleneinheit und/oder in einem Abgasstrom aus einer Anode der Brennstoffzelleneinheit eine Wasserseparationseinrichtung, insbesondere ein Kondensator, vorgesehen ist, welcher im entsprechenden Abgas enthaltenes Wasser absepariert und einer der autothermen Reformereinheit vorgeschalteten Wasserspeichereinrichtung zuführt.

In einer vorteilhaften Ausführungsform ist ein separater Wasserkreislauf vorgesehen, welcher die Wasserseparationseinrichtungen, die Brennstoffzelleneinheit, eine Luftzuführung an eine Kathode der Brennstoffzelleneinheit und/oder eine Luftzuführung an die Reformereinheit kühlt.

Zum Erzeugen einer entsprechenden, für die Reaktion in der Reformereinheit notwendigen Wärmeenergie ist ein katalytischer Brenner vorgesehen, welcher Abgas aus einer Anode der Brennstoffzelleneinheit verbrennt und entsprechende Abwärme der Reformereinheit über einen Wärmetauscher zuführt.

Eine alternative Wärmeerzeugung für die Reformereinheit erzielt man dadurch, daß der katalytische Brenner mit einem Vorratsbehälter für den Rohstoff verbunden ist.

Eine Energierückgewinnung erzielt man dadurch, daß in einem Abgasstrom einer Kathode der Brennstoffzelleneinheit ein Expander und in einem Zuluftstrom der Brennstoffzelleneinheit ein Kompressor, insbesondere ein zweistufiger Kompressor, vorgesehen ist, welche auf einer gemeinsamen Welle angeordnet sind.

Zweckmäßigerweise ist der Rohstoff eine Wasserstoff enthaltende Substanz, insbesondere Methanol oder Benzin.

Bei einem Verfahren der o.g. Art ist es erfindungsgemäß vorgesehen, daß der Brennstoffzelleneinheit über eine erste Stufe eines zweistufigen Verdichters Luft zugeführt wird und einer Reformereinheit Luft über die zweite Stufe des Verdichters zugeführt wird.

Dies hat den Vorteil, daß sowohl Anode wie auch Kathode der Brennstoffzelleneinheit trotz der unterschiedlichen Leitungswege und der voneinander verschiedenen, zu durchlaufenden Stufen ein gleicher Druck angeboten werden kann, was für deren Funktionsweise von erheblicher Bedeutung ist. So wird an einer ersten Stufe des Verdichters zur Luftversorgung der Kathode der Brennstoffzelleneinheit ein Luftstrom mit einem vergleichsweise niedrigen Druck abgegriffen, beispielsweise etwa 2,5 bar Druck bis 3,5 bar Druck, insbesondere ca. 3 bar Druck, während von einer zweiten Stufe des Verdichters, welche primär der Luftversorgung der Reformereinheit 18 dient, ein Luftstrom mit einem relativ hohen Druck abgegriffen wird, beispielsweise etwa 3,2 bar Druck bis 4,2 bar Druck, insbesondere ca. 3,7 bar Druck. Dieser erhöhte Druck in der zweiten Stufe berücksichtigt somit von vornherein Druckverluste, die im weiteren Weg von der Reformereinheit über die Oxidationseinheit zur Brennstoffzelleneinheit auftreten.

Für eine weitere Verbesserung der Wirtschaftlichkeit und insbesondere des Bauraumbedarfes kann an der Oxidationseinrichtung eine Wassereinspritzeinrichtung vorgesehen sein, welche in diese Wasser einspritzt.

Dies hat den Vorteil, daß gleichzeitig mit der Entfernung von Kohlenmonoxid aus einem Prozeßgas aus dem Reformerprozeß mit hohem Wasserstoffanteil für die Brennstoffzelleneinheit eine ausreichende Abkühlung bzw. Vorkühlung erfolgt, so daß das Prozeßgas ohne eine aufwendige Kühleinrichtung bzw. mit einer entsprechend geringer aufwendigen Kühleinrichtung zur Brennstoffzelleneinheit geleitet werden kann. Ferner liefert das eingespritzte Wasser auch einen für die Oxidation von Kohlenmonoxid erforderlichen Sauerstoff, wobei gleichzeitig durch diese Oxidationsreaktion zusätzlich Wasserstoff freigesetzt wird, so daß eine separate Sauerstoffzuführung zur Oxidationseinrichtung mengenmäßig verringert werden kann und gleichzeitig ein Wasserstoffanteil im Prozeßgas erhöht wird. Bei gleicher Leistung kann durch die zusätzliche Wasserstoffanreicherung in der Oxidationseinrichtung das Brennstoffzellensystem kleiner dimensioniert werden. Dies reduziert in entsprechender Weise einen Bauraumbedarf sowie einen apparativen Aufwand des Brennstoffzellensystems.

Für einen hohen Wirkungsgrad der Wasserzuführung wird dieses dampfförmig oder aerosolförmig eingespritzt.

Eine zusätzliche Wirkungsgraderhöhung der Brennstoffzelleneinheit kann dadurch erzielt werden, daß einem Prozeßgas zwischen Oxidation von Kohlenmonoxid und Brennstoffzelleneinheit und/oder einer Kathode der Brennstoffzelleneinheit komprimierte Luft zugeführt wird.

Einen geschlossenen Wasserkreislauf ohne die Notwendigkeit große mengen Wasser für den Reformerprozeß mitführen zu müssen erzielt man dadurch, daß aus einem Abgasstrom aus einer Kathode der Brennstoffzelleneinheit und/oder aus einem Abgasstrom aus einer Anode der Brennstoffzelleneinheit Wasser separiert und dem Reformerprozeß zugeführt wird.

Zum Erzeugen einer entsprechenden, für die Reaktion des Reformerprozesses notwendigen Wärmeenergie wird ein Abgas aus einer Anode der Brennstoffzelleneinheit verbrannt und dem Reformerprozeß eine entsprechende Abwärme zugeführt.

Eine alternative Wärmeerzeugung für die Reformereinheit erzielt man dadurch, daß Rohstoff verbrannt und eine entsprechende Wärmeenergie dem Reformerprozeß zugeführt wird.

Zweckmäßigerweise wird als Rohstoff eine Wasserstoff enthaltende Substanz, insbesondere Methanol oder Benzin, verwendet.

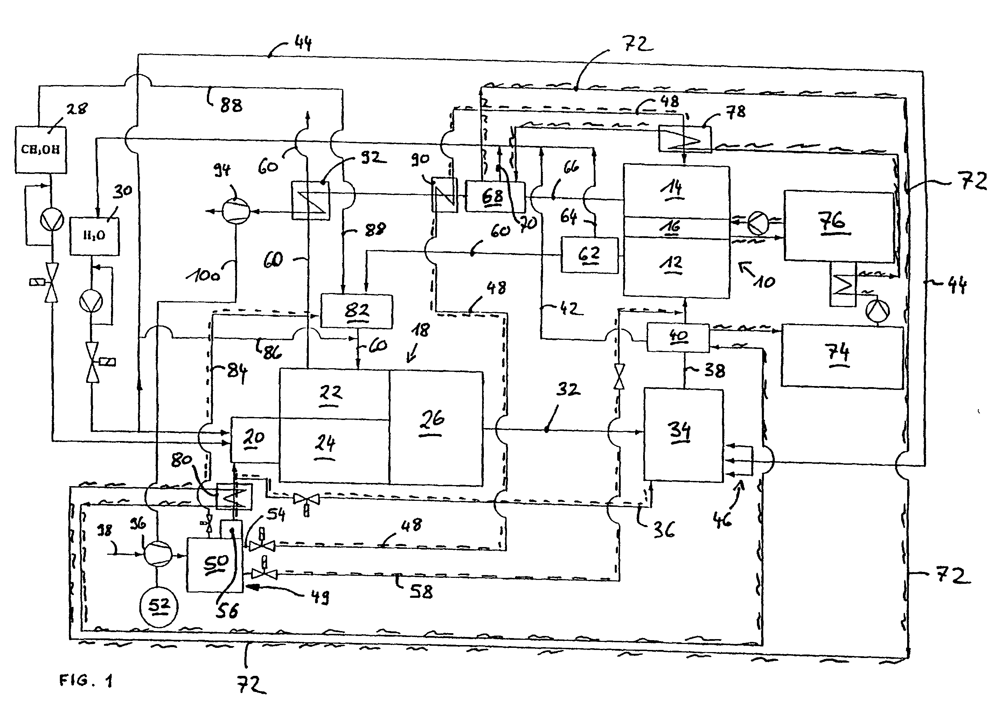

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt ein Blockschaltbild einer bevorzugten Ausführungsform eines erfindungsgemäßen Brennstoffzellensystems.

In diesem Brennstoffzellensystems wird Wasserstoff für eine Brennstoffzelleneinheit 10 mit einer Anode 12, einer Kathode 14 und einem Kühlelement 16 mittels einer autothermen Reformereinheit 18 erzeugt, welche einen Mischer 20, einen Wärmetauscher 22, einen Verdampfer 24 und einen katalytischen Reformer 26 umfaßt. Zur Erzeugung von Wasserstoff wird beispielsweise Methanol als Rohstoff aus einem Methanoltank 28 und Wasser aus einem Wassertank 30 dem Mischer 20 zugeführt. In dem Verdampfer 24 wird das Gemisch aus Methanol und Wasser verdampft und in dem katalytischen Reformer 26 wird in einer katalytischen Reaktion ein Prozeßgas in Form eines Rohgases 32 mit hohem Anteil an Wasserstoff erzeugt.

Dieses Rohgas enthält unter anderem Kohlenmonoxid (CO), welches vor dem Einleiten in die Brennstoffzelleneinheit 10 entfernt werden muß. Hierzu wird das Rohgas 32 in eine Oxidationseinheit 34 geleitet, wo unter Zuführung von Luft über Leitung 36 das Kohlenmonoxid zu Kohlendioxid ($CO_2$) oxidiert wird, so daß sich ein CO-Gehalt kleiner 20 ppm ergibt. Gleichzeitig erfolgt über eine Leitung 44 eine Zuführung von Wasser aus dem Wassertank 30, wobei das zugeführte Wasser mit einer Einspritzvorrichtung 46 in die Oxidationseinheit 34 eingespritzt wird. Dies führt zu einer gleichzeitigen Kühlung des Prozeßgases in der Oxidationseinheit 34. Diesem so erzeugten und abgekühlten Reingas 38 wird in einem AnodengasKondensator 40 Wasser entzogen, welches über Leitung 42 dem Wassertank 30 zurückgeführt wird. Anschließend wird das Reingas 38 mit einem hohen Gehalt an Wasserstoff in die Anode 12 der Brennstoffzelleneinheit 10 geleitet. Das Reingas 38 beinhaltet beispielsweise 50% $H_2$, 25% $N_2$ und 25% $CO_2$ bei einer Temperatur von etwa 180 bis 200 Grad Celsius. In dem AnodengasKondensator 40 wird es weiter auf beispielsweise etwa 85 Grad Celsius vor dem Einleiten in die Anode 12 abgekühlt.

Auf der Kathodenseite 14 wird der Brennstoffzelleneinheit 10 über Leitung 48 aus einem als zweistufigen Schraubenkompressor 50 ausgeführten Verdichter 49 komprimierte Luft zugeführt. Alle Luftleitungen sind in der Fig. mit gestrichelter Linie gekennzeichnet. Auf diese Weise erzeugt die Brennstoffzelleneinheit in bekannter Weise mittels der Reaktion

$$H_2 + \tfrac{1}{2}\, O_2 \rightarrow H_2O + \text{el. Energie}$$

elektrische Energie, welche an den Elektroden 12, 14 abgreifbar und einem Elektromotor 52 zuführbar ist. Der zweistufige Schraubenkompressor 50 umfaßt eine erste Stufe 54 mit beispielsweise etwa 3 bar Druck für die Kathode 14 und eine zweite Stufe 56 mit beispielsweise 3,7 bar Druck für das der Anode 12 zuzuführende Brenngas, also dem dehydrierten Reingas 38. Mittels eines weiteren Abgriffes am Schraubenkompressor 50 wird über Leitung 58 komprimierte Luft dem Reingas 38 nach dem Anodengaskondensator 40 zugeführt.

Im Anodenabgasstrom 60 ist ein Wasserseparator 62 angeordnet, welcher aus dem Anodenabgas 60 Wasser separiert und über Leitung 64 dem Wassertank 30 zuführt. Im Kathodenabgasstrom 66 ist ein Kondensator 68 angeordnet, welcher dem Kathodenabgas 66 Wasser entzieht und über Leitung 70 dem Wassertank 30 zuführt. Auf diese Weise ist für das Prozeßgas ein geschlossener Wasserkreislauf ausgebildet, so daß für die Herstellung von Wasserstoff in der Reformereinheit 18 keine großen Wassermengen mitgeführt werden müssen.

Zur Kühlung der Luftzufuhr an den Mischer 20, des AnodengasKondensators 40, des Wasserseparators 62, des Kondensators 68 und der Luftzuführung 48 an die Kathode 14 ist ein separater Wasserkreislauf 72 vorgesehen, welcher mit gewellten Linien gekennzeichnet ist. Dieser separate Wasserkreislauf 72 umfaßt einen Kühlwasserbehälter 74, einen Wasserbehälter mit Deionisation 76 und entsprechende Wärmetauscher 78 und 80 jeweils bei der Luftzuführung 48 an die Kathode 14 und bei der Luftzuführung an den Mischer 20.

Der Anodenabgasstrom 60 strömt in einen katalytischen Brenner 82, in dem das Anodenabgas 60 unter Erzeugung von Wärmeenergie weiter verbrannt wird. Diese Wärmeenergie wird dem Verdampfer 24 und dem katalytischen Reformer 26 mittels des Wärmetauschers 22 weitergegeben und hält dort die katalytische Reaktion zur Erzeugung von Wasserstoff aufrecht. Dem katalytischen Brenner 82 wird über eine Leitung 84 Luft zugeführt. Nach dem katalytischen Brenner 82 wird dem Anodenabgas 60 optional über Leitung 86 Wasser aus dem Wassertank 30 zugeführt. Über eine Leitung 88 ist dem katalytischen Brenner 82 wahlweise Methanol aus dem Methanoltank 28 zuführbar, so daß auch bei nicht ausreichendem Anodenabgasstrom 60, beispielsweise beim Anfahren des Brennstoffzellensystems, eine ausreichende Wärmeenergieerzeugung für die Reformereinheit 18 gewährleistet ist.

Der Kathodenabgasstrom 66 wird in einem Wärmetauscher 90 des separaten Wasserkreislaufes 72 gekühlt und ist anschließend über einen Wärmetauscher 92 thermisch mit dem Anodenabgasstrom 60 verbunden, bevor beide Abgasströme 60 und 66 das System verlassen.

Der Kathodenabgasstrom 66 wird dabei über eine Expansionsturbine 94 geleitet, welche zusammen mit einem Kompressor 96 zum Ansaugen von Luft 98, welcher als Eingangsstufe vor dem zweistufigen Kompressor 50 vorgesehen ist, auf einer gemeinsamen Welle 100 angeordnet. Hierdurch wird in dem Kathodenabgasstrom 66 enthaltene Energie für eine Kompression von Luft 98 im Kompressor 96 zurückgewonnen.

Ein besonderer Vorteil dieser Ausführungsform durch hohen Wirkungsgrad und geringen Bauraumbedarf und geringen apparativen Aufwand ergibt sich in der Kombination des zweistufigen Kompressors 50, der autothermen Reformereinheit 18 mit der zusätzlich kühlenden Wassereinspritzung 46 bei der selektiven Oxidation des Kohlenmonoxids (CO) in der Oxidationseinheit 34 zusammen mit einem autarken Wasserkreislauf 30, 40, 42, 62, 64, 68, 70.

**Patentansprüche**

1. Brennstoffzellensystem, insbesondere als Antriebssystem eines Kraftfahrzeuges, mit einer Reformereinheit (18) zum Erzeugen von Wasserstoff aus einem Energieträger, insbesondere einem flüssigen Rohstoff (28) unter Zufuhr von Luft zum Betreiben einer nachgeschalteten Brennstoffzelleneinheit (10), wobei zwischen Reformereinheit (18) und Brennstoffzelleneinheit (10) eine Oxidationseinrichtung (34) zum Umwandeln von Kohlenmonoxid in Kohlendioxid angeordnet ist,
**dadurch gekennzeichnet, daß**
der Reformereinheit (18) und der Brennstoffzelleneinheit (10) ein zweistufiger Verdichter (49) für die Luft zugeordnet ist.

2. Brennstoffzellensystem nach Anspruch 1,
**dadurch gekennzeichnet, daß**
der Verdichter (49) eine erste Stufe (54) zur Luftversorgung einer Kathode (14) der Brennstoffzelleneinheit (10) mit einem niedrigeren Druck aufweist, als eine zweite Stufe (56) des Verdichters (49), welche der Luftversorgung der Reformereinheit (18) dient.

3. Brennstoffzellensystem nach Anspruch 1 oder 2,
**dadurch gekennzeichnet, daß**
der Verdichter (49) ein Kolbenverdichter, ein Schraubenverdichter bzw. -kompressor (50) oder ein Kreiselverdichter ist.

4. Brennstoffzellensystem nach Anspruch 2 oder 3,
**dadurch gekennzeichnet, daß**
der Druck in der ersten Stufe (54) etwa 2,5 bar bis 3,5 bar, insbesondere ca. 3 bar beträgt.

5. Brennstoffzellensystem nach einem der Ansprüche 2 bis 4,
**dadurch gekennzeichnet, daß**
der Druck in der zweiten Stufe (56) etwa 3,2 bar bis 4,2 bar, insbesondere ca. 3,7 bar beträgt.

6. Brennstoffzellensystem nach Anspruch 2,
**dadurch gekennzeichnet, daß**
der Druck in der zweiten Stufe (56) etwa 0,5 bar bis 0,9 bar, insbesondere ca. 0,7 bar höher ist als in der ersten Stufe (54).

7. Brennstoffzellensystem nach Anspruch 1,
**dadurch gekennzeichnet, daß**
die Reformereinheit (18) einen Mischer (20) für den Rohstoff (28) und die Luft aufweist.

8. Brennstoffzellensystem nach einem der vorhergehenden Ansprüche,
**dadurch gekennzeichnet, daß**
in einem Abgasstrom (66) aus einer Kathode (14) der Brennstoffzelleneinheit (10) und/oder in einem Abgasstrom (60) aus einer Anode (12) der Brennstoffzelleneinheit (10) und/oder in einem Reingasstrom (38) aus der Oxidationseinheit (34) eine Wasserseparationseinrichtung (40, 62, 68), insbesondere ein Kondensator, vorgesehen ist, welcher im entsprechenden Gas (38, 60, 66) enthaltenes Wasser separiert und einer der Reformereinheit (18) vorgeschalteten Wasserspeicheinrichtung (30) zuführt.

9. Brennstoffzellensystem nach Anspruch 8,
**dadurch gekennzeichnet, daß**
ein separater Wasserkreislauf (72) vorgesehen ist, welcher wenigstens eine derWasserseparationseinrichtungen (40, 62, 68) die Brennstoffzelleneinheit (10, 16), eine Luftzuführung (48) an eine Kathode (14) der Brennstoffzelleneinheit (10) und/oder eine Luftzuführung an die Reformereinheit (18, 20) kühlt.

10. Brennstoffzellensystem nach einem oder mehreren der vorhergehenden Ansprüche,
**dadurch gekennzeichnet, daß**
eine Einspritzvorrichtung (46) für Wasser an der Oxidationseinheit (34) vorgesehen ist, welche Wasser in diese einspritzt.

11. Brennstoffzellensystem nach einem der vorhergehenden Ansprüche,
**dadurch gekennzeichnet, daß**
ein katalytischer Brenner (82) vorgesehen ist, welcher Abgas (60) aus einer Anode (12) der Brennstoffzelleneinheit (10) verbrennt und entsprechende Abwärme der Reformereinheit (18) über einen Wärmetauscher (22) zuführt.

12. Brennstoffzellensystem nach Anspruch 11,
**dadurch gekennzeichnet, daß**
der katalytische Brenner (82) mit einem Vorratsbehälter (28) für den Rohstoff ver bunden ist.

13. Brennstoffzellensystem nach einem der vorhergehenden Ansprüche,
**dadurch gekennzeichnet, daß**
in einem Abgasstrom (66) einer Kathode (14) der Brennstoffzelleneinheit (10) ein Expander (94) und in einem Zuluftstrom (98) der Brennstoffzelleneinheit (10) ein Kompressor (96), insbesondere eines zweistufigen Kompressors (50), vorgesehen ist, welche auf einer gemeinsamen Welle (100) angeordnet sind.

14. Brennstoffzellensystem nach einem der vorhergehenden Ansprüche,
**dadurch gekennzeichnet, daß**
der Rohstoff (28) eine Wasserstoff enthaltende Substanz, insbesondere Methanol oder Benzin, ist.

15. Verfahren zum Erzeugen elektrischer Energie mittels eines Brennstoffzellensystems, insbesondere für ein Antriebssystem eines Kraftfahrzeuges, wobei zum Betreiben einer Brennstoffzelleneinheit Wasserstoff in einem Reformerprozeß aus einem Rohstoff unter Zufuhr von Luft erzeugt wird, wobei nach dem Reformerprozeß und vor der Brennstoffzelleneinheit Kohlenmonoxid zu Kohlendioxid oxidiert wird,
**dadurch gekennzeichnet, daß**
der Brennstoffzelleneinheit über eine erste Stufe eines zweistufigen Verdichters Luft zugeführt wird und einer Reformereinheit Luft über die zweite Stufe zugeführt wird.

16. Verfahren nach Anspruch 15,
**dadurch gekennzeichnet, daß**
der Verdichter über die erste Stufe die Luft einer Kathode der Brennstoffzelleneinheit mit einem niedrigeren Druck zuführt als eine zweite Stufe des Verdichters, welche der Luftversorgung der Reformereinheit dient.

17. Verfahren nach Anspruch 15,
**dadurch gekennzeichnet, daß**
bei der Oxidation von Kohlenmonoxid zu Kohlendioxid Wasser eingespritzt wird.

18. Verfahren nach Anspruch 17,
**dadurch gekennzeichnet, daß**
das Wasser dampfförmig oder aerosolförmig eingespritzt wird.

19. Verfahren nach Anspruch 15,
**dadurch gekennzeichnet, daß**
einem Prozeßgas zwischen Oxidation von Kohlenmonoxid und Brennstoffzelleneinheit und/oder einer Kathode der Brennstoffzelleneinheit komprimierte Luft zugeführt wird.

20. Verfahren nach einem der Ansprüche 15 bis 19,
**dadurch gekennzeichnet, daß**
aus einem Abgasstrom aus einer Kathode der Brennstoffzelleneinheit und/oder aus einem Abgasstrom aus einer Anode der Brennstoffzelleneinheit Wasser separiert und dem Reformerprozeß zugeführt wird.

21. Verfahren nach einem der Ansprüche 15 bis 20,
**dadurch gekennzeichnet, daß**
ein Abgas aus einer Anode der Brennstoffzelleneinheit verbrannt und eine entsprechende Abwärme dem Reformerprozeß zugeführt wird.

22. Verfahren nach einem der Ansprüche 15 bis 21,
**dadurch gekennzeichnet, daß**
Rohstoff verbrannt und eine entsprechende Wärmeenergie dem Reformerprozeß zugeführt wird.

23. Verfahren nach einem der Ansprüche 15 bis 22,
**dadurch gekennzeichnet, daß**
als Rohstoff eine Wasserstoff enthaltende Substanz, insbesondere Methanol oder Benzin, verwendet wird.

**Claims**

1. Fuel cell system, in particular as the drive system of a motor vehicle, having a reformer unit (18) for generating hydrogen from an energy carrier, in particular a liquid raw material (28), with air being supplied, to operate a downstream fuel cell unit (10), an oxidation device (34) for converting carbon monoxide into carbon dioxide being arranged between reformer unit (18) and fuel cell unit (10), **characterized in that** the reformer unit (18) and the fuel cell unit (10) are assigned a two-stage compressor (49) for the air.

2. Fuel cell system according to Claim 1, **characterized in that** the compressor (49) has a first stage (54), for supplying air to a cathode (14) of the fuel cell unit (10) at a lower pressure than a second stage (56) of the compressor (49), which is used to supply air to the reformer unit (18).

3. Fuel cell system according to Claim 1 or 2, **characterized in that** the compressor (49) is a piston compressor, a worm compressor (50) or a centrifugal compressor.

4. Fuel cell system according to Claim 2 or 3, **characterized in that** the pressure in the first stage (54) is approximately 2.5 bar to 3.5 bar, in particular approx. 3 bar.

5. Fuel cell system according to one of Claims 2 to 4, **characterized in that** the pressure in the second stage (56) is approximately 3.2 bar to 4.2 bar, in particular approx. 3.7 bar.

6. Fuel cell system according to Claim 2, **characterized in that** the pressure in the second stage (56) is approximately 0.5 bar to 0.9 bar, in particular approx. 0.7 bar, higher than in the first stage (54).

7. Fuel cell system according to Claim 1, **characterized in that** the reformer unit (18) has a mixer (20) for the raw material (28) and the air.

8. Fuel cell system according to one of the preceding claims, **characterized in that** a water separation device (40, 62, 68), in particular a condenser, is provided in an exhaust-gas stream (66) from a cathode (14) of the fuel cell unit (10) and/or in an exhaust-gas stream (60) from an anode (12) of the fuel cell unit (10) and/or in a clean-gas stream (38) from the oxidation unit (34), this water separation device separating out water which is present in the corresponding gas (38, 60, 66) and feeding it to a water storage device (30) which is connected upstream of the reformer unit (18).

**9.** Fuel cell system according to Claim 8, **characterized in that** there is a separate water circuit (72), which cools at least one of the water separation devices (40, 62, 68), the fuel cell unit (10, 16), an air feed (48) to a cathode (14) of the fuel cell unit (10) and/or an air feed to the reformer unit (18, 20).

**10.** Fuel cell system according to one or more of the preceding claims, **characterized in that** there is an injection device (46) for water at the oxidation unit (34), which injects water into the oxidation unit.

**11.** Fuel cell system according to one of the preceding claims, **characterized in that** there is a catalytic burner (82) which burns exhaust gas (60) from an anode (12) of the fuel cell unit (10) and supplies corresponding waste heat to the reformer unit (18) via a heat exchanger (22).

**12.** Fuel cell system according to Claim 11, **characterized in that** the catalytic burner (82) is connected to a reservoir (28) for the raw material.

**13.** Fuel cell system according to one of the preceding claims, **characterized in that** an expander (94) is provided in an exhaust-gas stream (66) from a cathode (14) of the fuel cell unit (10), and a compressor (96), in particular a two-stage compressor (50), is provided in a feed-air stream (98) of the fuel cell unit (10), the expander and compressor being arranged on a common shaft (100).

**14.** Fuel cell system according to one of the preceding claims, **characterized in that** the raw material (28) is a hydrogen-containing substance, in particular methanol or petrol.

**15.** Method for generating electrical energy by means of a fuel cell system, in particular for a drive system of a motor vehicle, in which, to operate a fuel cell unit, hydrogen is generated in a reformer process from a raw material with air being supplied, carbon monoxide being oxidized to form carbon dioxide following the reformer process and before the fuel cell unit, **characterized in that** air is fed to the fuel cell unit via a first stage of a two-stage compressor, and air is fed to a reformer unit via the second stage.

**16.** Method according to Claim 15, **characterized in that** the compressor, via the first stage, feeds the air to a cathode of the fuel cell unit at a lower pressure than a second stage of the compressor, which is used to supply air to the reformer unit.

**17.** Method according to Claim 15, **characterized in that** water is injected during the oxidation of carbon monoxide to form carbon dioxide.

**18.** Method according to Claim 17, **characterized in that** the water is injected in vapour or aerosol form.

**19.** Method according to Claim 15, **characterized in that** compressed air is fed to a process gas between oxidation of carbon monoxide and fuel cell unit and/or a cathode of the fuel cell unit.

**20.** Method according to one of Claims 15 to 19, **characterized in that** water is separated out of an exhaust-gas stream from a cathode of the fuel cell unit and/or out of an exhaust-gas stream from an anode of the fuel cell unit and is fed to the reformer process.

**21.** Method according to one of Claims 15 to 20, **characterized in that** an exhaust gas from an anode of the fuel cell unit is burnt, and corresponding waste heat is fed to the reformer process.

**22.** Method according to one of Claims 15 to 21, **characterized in that** raw material is burnt and a corresponding thermal energy is fed to the reformer process.

**23.** Method according to one of Claims 15 to 22, **characterized in that** the raw material used is a hydrogen-containing substance, in particular methanol or petrol.

**Revendications**

**1.** Système à pile à combustible, en particulier comme système d'entraînement d'un véhicule à moteur, présentant une unité de reformage (18) pour la production d'hydrogène à partir d'un support d'énergie, en particulier d'un produit de départ (28) liquide, avec alimentation en air pour le fonctionnement d'une unité à pile à combustible (10) disposée en aval, un dispositif d'oxydation (34) pour la transformation de monoxyde de carbone en dioxyde de carbone étant disposé entre l'unité de reformage (18) et l'unité à pile à combustible (10), **caractérisé en ce qu'**un compresseur (49) à deux étages pour l'air est associé à l'unité de reformage (18) et à l'unité à pile à combustible (10).

**2.** Système à pile à combustible selon la revendication 1, **caractérisé en ce que** le compresseur (49) présente un premier étage (54) pour l'alimentation en air d'une cathode (14) de l'unité à pile à combustible (10) avec une plus faible pression qu'un deuxième étage (56) du compresseur (49) qui sert à l'alimentation en air de l'unité de reformage (18).

**3.** Système à pile à combustible selon les revendications 1 ou 2, **caractérisé en ce que** le compresseur (49) est un compresseur à piston, un compresseur à vis (50) ou un compresseur centrifuge.

4. Système à pile à combustible selon les revendications 2 ou 3, **caractérisé en ce que** la pression dans le premier étage (54) est d'environ 2,5 bars à 3,5 bars, en particulier d'environ 3 bars.

5. Système à pile à combustible selon l'une quelconque des revendications 2 à 4, **caractérisé en ce que** la pression dans le deuxième étage (56) est d'environ 3,2 bars à 4,2 bars, en particulier d'environ 3,7 bars.

6. Système à pile à combustible selon la revendication 2, **caractérisé en ce que** la pression dans le deuxième étage (56) est plus haute d'environ 0,5 bar à 0,9 bar, en particulier d'environ 0,7 bar que dans le premier étage (54).

7. Système à pile à combustible selon la revendication 1, **caractérisé en ce que** l'unité de reformage (18) présente un mélangeur (20) pour le produit de départ (28) et l'air.

8. Système à pile à combustible selon l'une quelconque des revendications précédentes, **caractérisé en ce qu'**on a prévu dans un flux (66) d'effluents gazeux provenant d'une cathode (14) de l'unité à pile à combustible (10) et/ou dans un flux (60) d'effluents gazeux provenant d'une anode (12) de l'unité à pile à combustible (10) et/ou dans un flux (38) de gaz pur provenant de l'unité d'oxydation (34), un dispositif de séparation d'eau (40, 62, 68), en particulier un condenseur, qui sépare l'eau contenue dans le gaz correspondant (38, 60, 66) et l'introduit dans un dispositif d'accumulation d'eau (30) disposé en amont de l'unité de reformage (18).

9. Système à pile à combustible selon la revendication 8, **caractérisé en ce qu'**on a prévu un circuit d'eau (72) séparé, qui refroidit au moins un des dispositifs de séparation d'eau (40, 62, 68), l'unité à pile à combustible (10, 16), une alimentation en air (48) sur une cathode (14) de l'unité à pile à combustible (10) et/ou une alimentation en air sur l'unité de reformage (18, 20).

10. Système à pile à combustible selon l'une ou plusieurs des revendications précédentes, **caractérisé en ce qu'**on a prévu un dispositif d'injection (46) pour l'eau sur l'unité d'oxydation (34), qui injecte de l'eau dans celle-ci.

11. Système à pile à combustible selon l'une quelconque des revendications précédentes, **caractérisé en ce qu'**on a prévu un brûleur (82) catalytique, qui brûle les effluents gazeux (60) provenant d'une anode (12) de l'unité à pile à combustible (10) et qui introduit la chaleur dissipée correspondante dans l'unité de reformage (18) via un échangeur de chaleur (22).

12. Système à pile à combustible selon la revendication 11, **caractérisé en ce que** le brûleur (82) catalytique est raccordé à un réservoir (28) pour le produit de départ.

13. Système à pile à combustible selon l'une quelconque des revendications précédentes, **caractérisé en ce qu'**on a prévu dans un flux (66) d'effluents gazeux provenant d'une cathode (14) de l'unité à pile à combustible (10) un dispositif d'expansion (94) et dans un flux (98) d'air introduit dans l'unité à pile à combustible (10) un compresseur (96), en particulier un compresseur à deux étages (50), qui sont disposés sur un arbre (100) commun.

14. Système à pile à combustible selon l'une quelconque des revendications précédentes, **caractérisé en ce que** le produit de départ (28) est une substance contenant de l'hydrogène, en particulier du méthanol ou de l'essence.

15. Procédé pour la production d'énergie électrique au moyen d'un système à pile à combustible, en particulier pour un système d'entraînement d'un véhicule à moteur, de l'hydrogène étant produit dans un processus de reformage à partir d'un produit de départ avec alimentation en air pour le fonctionnement d'une unité à pile à combustible, le monoxyde de carbone étant oxydé en dioxyde de carbone après le processus de reformage et avant l'unité à pile à combustible, **caractérisé en ce que** l'unité à pile à combustible est alimentée en air via un premier étage d'un compresseur à deux étages et l'unité de reformage est alimentée en air via le deuxième étage.

16. Procédé selon la revendication 15, **caractérisé en ce que** le compresseur alimente en air, via le premier étage, une cathode de l'unité à pile à combustible avec une pression plus basse qu'un deuxième étage du compresseur, qui sert à l'alimentation en air de l'unité de reformage.

17. Procédé selon la revendication 15, **caractérisé en ce que** de l'eau est injectée lors de l'oxydation de monoxyde de carbone en dioxyde de carbone.

18. Procédé selon la revendication 17, **caractérisé en ce que** l'eau est injectée sous forme de vapeur ou d'aérosol.

19. Procédé selon la revendication 15, **caractérisé en ce qu'**un gaz de procédé est alimenté entre l'oxydation du monoxyde de carbone et l'unité à pile à combustible et/ou qu'une cathode de l'unité à pile à combustible est alimentée en air comprimé.

20. Procédé selon l'une quelconque des revendications 15 à 19, **caractérisé en ce que** de l'eau est séparée d'un flux d'effluents gazeux provenant d'une cathode de l'unité à pile à combustible et/ou d'un flux d'effluents gazeux provenant d'une anode de l'unité à pile à combustible et est introduite dans le processus de reformage.

21. Procédé selon l'une quelconque des revendications 15 à 20, **caractérisé en ce qu'**un effluent gazeux provenant d'une anode de l'unité à pile à combustible est brûlé et qu'une chaleur dissipée correspondante est introduite dans le processus de reformage.

22. Procédé selon l'une quelconque des revendications 15 à 21, **caractérisé en ce que** le produit de départ est brûlé et qu'une énergie thermique correspondante est introduite dans le processus de reformage.

23. Procédé selon l'une quelconque des revendications 15 à 22, **caractérisé en ce qu'**on utilise comme produit de départ une substance contenant de l'hydrogène, en particulier du méthanol ou de l'essence.

FIG. 1